Europäisches Patentamt

European Patent Office

Office européen des brevets

(11) Veröffentlichungsnummer : **0 347 716 B1**

# (12) EUROPÄISCHE PATENTSCHRIFT

(51) Int. Cl.⁵ : **B23H 11/00, B23H 1/00, B23H 9/00**

(45) Veröffentlichungstag der Patentschrift :
**19.08.92 Patentblatt 92/34**

(21) Anmeldenummer : **89110658.5**

(22) Anmeldetag : **13.06.89**

(54) **Funkenerosionsmaschine.**

(30) Priorität : **18.06.88 DE 3820686**

(43) Veröffentlichungstag der Anmeldung :
**27.12.89 Patentblatt 89/52**

(45) Bekanntmachung des Hinweises auf die
Patenterteilung :
**19.08.92 Patentblatt 92/34**

(84) Benannte Vertragsstaaten :
**CH DE ES IT LI**

(56) Entgegenhaltungen :
**DE-A- 3 530 580**
**DE-B- 1 565 371**
**US-A- 3 748 428**
**PATENT ABSTRACTS OF JAPAN, unexamined**
**applications, Sektion M, Band 4, Nr. 99, 16. Juli**
**1980 THE PATENT OFFICE JAPANESEGO-**
**VERNMENT Seite 138 M 21**

(73) Patentinhaber : **AEG-Elotherm GmbH**
**Hammesberger Strasse 31**
**W-5630 Remscheid-Hasten (DE)**

(72) Erfinder : **Stengel, Edgar**
**Erdelenstrasse 35**
**W-5630 Remscheid (DE)**
Erfinder : **Fey, Franz-Josef**
**Reinshagener Strasse 117**
**W-5630 Remscheid (DE)**

(74) Vertreter : **Patentanwaltsbüro Cohausz &**
**Florack**
**Schumannstrasse 97**
**W-4000 Düsseldorf 1 (DE)**

## Beschreibung

Die Erfindung betrifft eine Funkenerosionsmaschine mit einem Ständer, der in Seitenansicht C-Profil besitzt und an seinem oberen Kragarm den Werkzeugkopf trägt, der in der Horizontalebene (x-,y-Achse) ortsfest und in der Vertikalen (z-Achse) hin- und herbeweglich angeordnet und mit Mitteln zur Aufnahme der Bearbeitungselektrode ausgestattet ist, sowie mit einem Aufspanntisch für das zu bearbeitende Werkstück und einem darauf befestigten Behälter zur Aufnahme der dieletrischen Arbeitsflüssigkeit.

Die in Funkenerosionsmaschinen zu bearbeitenden Werkstücke werden wie bei anderen Werkzeugmaschinen auf einem Tisch aufgespannt. Zum Ausrichten und Bearbeiten werden die Bearbeitungselektrode und das Werkstück relativ zueinander bewegt. Da das Werkstück in aller Regel auf einem ortsfesten Aufspanntisch aufgespannt ist, erfolgt die Relativverschiebung allein durch das Bewegen der Bearbeitungselektrode, die mit dem Werkzeugkopf drehbeweglich und in der Vertikalen (z-Achse) verschiebbar ist. Die Horizontalverschiebung der Elektrode gegenüber dem aufgespannten Werkstück erfolgt über den Ständer, der Kragarm ist in einer Richtung (x-Achse) und die Säule in der anderen Horizontalrichtung (y-Achse) verschiebbar. Die Verschieblichkeit der Elektrode in der Horizontalebene (x-und y-Achse) ist konstruktiv außerordentlich aufwendig. Infolge der verhältnismäßig hohen zu verschiebenden Gewichte treten in den Schiebeführungen erhebliche Beanspruchungen, vornehmlich durch Biegekräfte auf, welche die Lager stark belasten und zu einem frühzeitigen Verschleiß führen.

Im Arbeitsspalt zwischen dem Ende der Elektrode und dem Werkstück muß eine dielektrische Flüssigkeit vorhanden sein. Bei Funkenerosionsmaschinen ist daher um das aufgespannte Werkstück stets ein Behälter angeordnet, der mit der dielektrischen Flüssigkeit gefüllt wird, bevor die abtragende Bearbeitung beginnt. Nach Beendigung der Bearbeitung wird die dielektrische Flüssigkeit aus dem Behälter abgelassen, der Behälter wird geöffnet, das fertig bearbeitete Werkstück wird entfernt und ein neues wird aufgespannt.

Der Erfindung liegt nun die Aufgabe zugrunde, den konstruktiven Aufwand für den mechanischen Teil der Funkenerosionsmaschine zu verringern, dabei die Krafteinleitung zu optimieren und die Bedienungsfreundlichkeit zu verbessern. Dazu gehört auch, daß sich der Behälter für die Aufnahme der dielektrischen Flüssigkeit in möglichst einfacher Weise und insbesondere schnell soweit öffnen läßt, daß der Zugriff zu dem Werkstück ermöglicht wird, um einen Werkstückwechsel zeitsparend vornehmen zu können. Bekanntlich sind Rüstzeiten Totzeiten, welche die Fertigungskosten entsprechend erhöhen.

Zur Lösung der gestellten Aufgabe wird bei einer Funkenerosionsmaschine der eingangs genannten Gattung gemäß der Erfindung vorgeschlagen, daß der Arbeitstisch ein Kreuztisch ist und daß der Behälter ein Faltenbalgbehälter ist mit höhenverstellbarem Rahmen und daran befestigten in vertikaler Richtung ziehharmonikaartig auf- und zusammenfaltbaren Wänden, deren unterer Rand dichtend am Aufspanntisch befestigt ist.

Durch die Ausbildung des Arbeitstisches als Kreuztisch wird der Teil der Aufgabe gelöst, der sich auf eine Verbesserung der Belastung der Führungen bei der Relativverschiebung zwischen Werkstück und Elektrode bezieht. Der sehr stark auf Biegung beanspruchte obere Kragarm des in Seitenansicht C-förmig profilierten Maschinenständers kann ortsfest bleiben, weil die Verschiebung in der Horizontalebene (x- und y-Achse) über den Kreuztisch erfolgt, dessen Führungen kaum auf Biegung, sondern hauptsächlich auf Druck beansprucht sind. Die Druckbelastung kann besser abgefangen werden als Biegekräfte, wenn diese Führungen belasten. Die Realtivbewegung in der dritten Richtung (z-Achse) erfolgt durch Vertikalverschiebung der im Werkzeugkopf eingespannten Elektrode am oberen Kragarm des C-Ständers der Maschine.

Durch die erfindungsgemäße Ausbildung des Behälters für die dielektrische Flüssigkeit wird ein Teil der gestellten Aufgabe gelöst, denn nach Beendigung der funkenerosiven Bearbeitung des Werkstücks wird eine rasche Entfernung des Behälters durch ziehharmonikaartiges Zusammenfalten der Wände des Faltenbalgbehälters nach dem Ablassen der dielektrischen Flüssigkeit aus dem Behälter ermöglicht. Der Faltenbalg wird dabei durch Zusammenfalten so weit abgesenkt, daß ein unbehindertes Wechseln des aufgespannten Werkstücks auf dem Aufspanntisch ermöglicht wird. Das Absenken der Faltenbalgbehälterwände kann dabei synchron zu dem Absinken des Spiegels der Arbeitsflüssigkeit in dem Behälter und damit in kürzester Zeit erfolgen. Nach dem Werkstückwechsel werden die Wände des Faltenbalgbehälters aufgefaltet (aufgestellt), indem der auf dem Arbeitstisch abgestützte Rahmen angehoben wird. Der Faltenbalgbehälter wird dann mit der dielektrischen Flüssigkeit gefüllt, worauf mit der Bearbeitung des nächsten Werkstücks begonnen werden kann.

Für das Aufstellen und Zusammenfalten des Faltenbalgs, der mit seiner Unterseite an einem Sockel und mit seiner Oberseite an einem Rahmen befestigt ist, gibt es verschiedene konstruktive Lösungen, insbesondere pneumatische oder hydraulische Kolben-Zylindereinheiten oder Spindelbetrieb. Diese Hubvorrichtungen greifen einerseits am Rahmen und andererseits am Aufspanntisch an und verändern die Höhenlage des Rahmens. Beim Zusammenfalten der Wände des Faltenbalgbehälters wird der Rahmen abgesenkt und zum Auffalten (Aufstellen) angehoben. Eine seitliche Führung des Rahmens, etwa an einer feststehenden Rückwand,

2

kann dabei zweckmäßig sein.

Für die Höhenverstellung des Rahmens kommt man mit zwei Hubvorrichtungen aus. Bevorzugt wird erfindungsgemäß eine Führung des Rahmens mittels Nürnberger Scheren, die einerseits am Rahmen und andererseits am Aufspanntisch an gegenüberliegenden Seiten des Faltenbalgbehälters befestigt sind. Sie stabilisieren den Rahmen dabei in Querrichtung.

Eine besonders einfache konstruktive Ausgestaltung ergibt sich, wenn der untere Rand der Wände des Faltenbalgbehälters unter der Spannebene des Aufspanntisches an diesem befestigt ist. Diese Lösung eignet sich besonders in Verbindung mit Kreuztischen, denn die Oberkante des Rahmens des Faltenbalgbehälters kann dann ganz unter die Aufspannebene abgesenkt werden.

In der Regel ist in dem Behälter für die dielektrische Flüssigkeit an Funkenerosionsmaschinen ein Überlauf angeordnet. Erfindungsgemäß wird es nun bevorzugt, den Überlauf an dem Rahmen zu befestigen, um ihn mit dem Faltenbalbehälter abzusenken bzw. anzuheben. Die dielektrische Flüssigkeit kann so während des Absenkens des Faltenbalg-Behälters durch den Überlauf abfließen, so daß sich der Behälter leert, während er abgesenkt wird. Der Überlauf kann dabei als starres Rohr abgesenkt werden. Gemäß einer vorteilhaften Ausgestaltung der Erfindung kann der Überlauf aber auch als Faltenbalg ausgebildet sein. Behälter und Überlauf können dabei synchron gefaltet werden.

Im Rahmen der Erfindung ist es jedoch auch möglich, den Faltenbalg-Behälter zum Entleeren unter Mitnahme des Überlaufrohres etwas anzuheben. Wenn das Überlaufrohr im Fußbereich Öffnungen hat, die beim Anheben freigegeben werden, oder wenn eine Öffnung freigegeben wird, wenn das Überlaufrohr angehoben wird, kann die dielektrische Flüssigkeit durch den Grundablauf schnell abgelassen werden, bevor das Absenken des Rahmens mit dem Faltenbalgbehälter beginnt. In beiden Fällen wird die dielektrische Flüssigkeit schnell abgeleitet und der Behälter entleert.

In der Zeichnung sind Ausführungsbeispiele der Erfindung dargestellt. Es zeigen:

Fig. 1a eine Seitenansicht der Funkenerosionsmaschine,

Fig. 1b eine perspektivische Darstellung des Kreuztisches,

Fig. 2 einen senkrechten Teilschnitt in einer Endstellung und

Fig. 3 in einer angehobenen Stellung des Behälters,

Fig. 4 in abgesenkter Endstellung des Behälters,

Fig. 5 eine weitere Ausgestaltung mit Faltenbalg-Überlauf,

Fig. 6 einen Teilschnitt und

Fig. 7 die Seitenansicht einer Ausführung des Faltenbalgbehälters mit Nürnberger Schere.

Gleiche Teile sind in den verschiedenen Abbildungen mit denselben Bezugszeichen versehen.

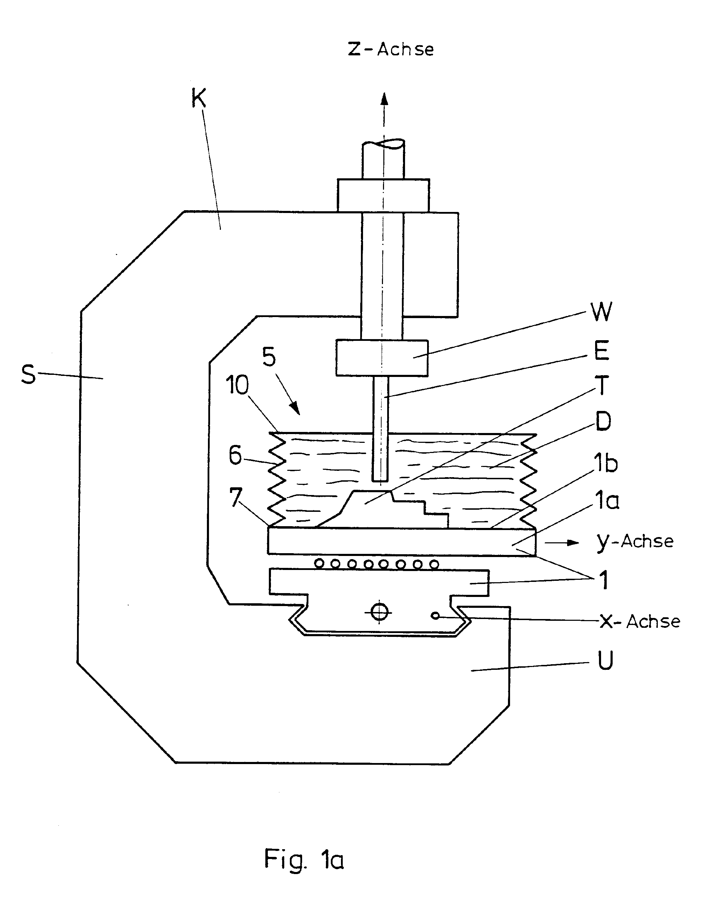

Die Funkenerosionsmaschine besteht gem. Fig. 1a aus dem in Seitenansicht C-förmigen Ständer S, an dessen oberem Kragarm K der Werkzeugkopf W angeordnet ist, in dem die Bearbeitungselektrode E eingespannt ist, die mit dem Werkzeugkopf W vertikal verschiebbar im Kragarm K gelagert ist. Im unteren Schenkel U des Ständers S ist der Kreuztisch 1 in zwei zueinander senkrechte Richtungen (x-und y-Achse) verschiebbar gelagert. Der obere Teil des Kreuztisches 1 ist der Aufspanntisch 1a, auf dessen Spannfläche 1b das zu bearbeitende Werkstück T aufgespannt ist. Um das Werkstück T herum ist der die dielektrische Flüssigkeit D aufnehmende Faltenbalgbehälter 6 angeordnet, der einen heb- und senkbaren Rahmen 10 und ziehharmonikaartig faltbare Wände 6′ aufweist. Am unteren Rand sind die Wände 6′ des Faltbalgbehälters 6 dichtend mit dem Aufspanntisch 1a verbunden.

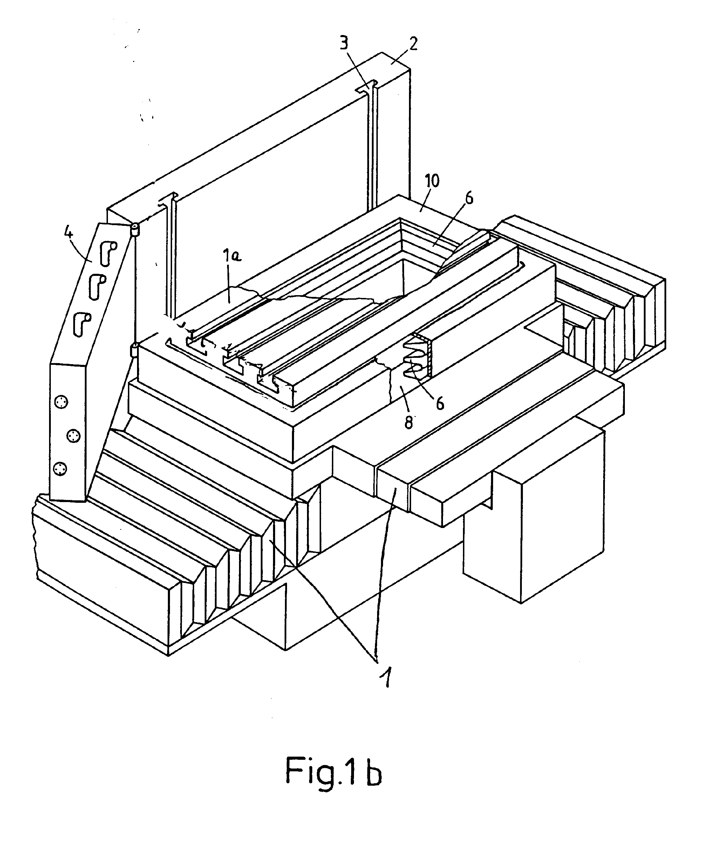

Wie aus Fig. 1b ersichtlich ist, kann am Aufspanntisch 1a eine feste Rückwand 2 angeordnet sein, in der Führungsnuten 3 für in diesem Bild nicht dargestellte Nürnberger Scheren oder andere Führungsmittel eingearbeitet sind und an der die Dielektrikumsverteilung 4 schwenkbar angesetzt ist.

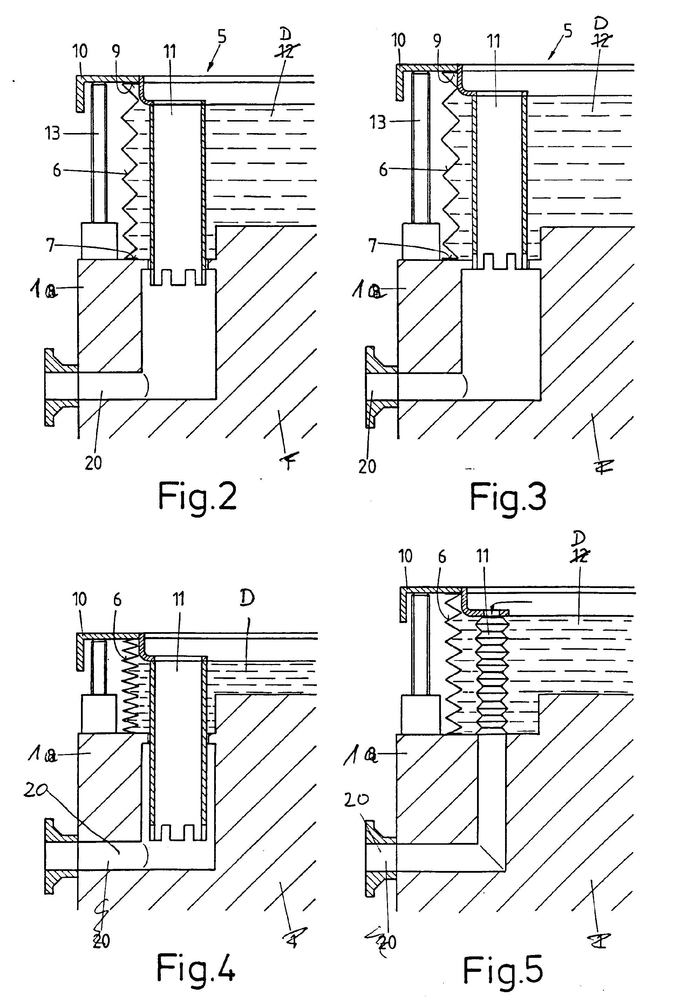

Gemäß Fig. 2 bis 4 besteht der Faltenbalgbehälter 5 aus einem oben und unten offenen, rundherum jedoch durch ziehharmonikaartig auf- und zusammenfaltbare Wände 6 geschlossenen Faltenbalg. Der untere Rand 7 der Wände 6 ist am Aufspanntisch 1a dichtend befestigt. Am oberen Rand 9 sind die Wände 6 an einem umlaufenden Rahmen 10 befestigt. Innerhalb des Faltenbalgbehälters 5 ist ein Überlauf 11 für die dielektrische Flüssigkeit D, mit der der Behälter 5 gefüllt wird, vorgesehen. An dem Rahmen 10 greift eine Spindel 13 an, mittels der der Rahmen 10 und mit ihm die befestigten faltbaren Wände 6 aus der in Fig. 2 dargestellten ausgefahrenen oberen Arbeitsstellung in die überhöte Stellung gemäß Fig. 3 verfahrbar ist, in der die dielektrische Flüssigkeit D durch Öffnungen am Fuß des Überlaufs 11 aus dem Faltenbalgbehälter 5 durch die Leitung 20 abgelassen werden kann. Nach dem Ablaufen der Flüssigkeit D kann der Rahmen 10 mit den faltbaren Wänden 6 in die untere Stellung gemäß Fig. 3 verfahren werden, in der der Faltenbalgbehälter 5 unter die Ebene des Aufspanntischs 1a abgesenkt ist und in der das aufgespannte Werkstück T von drei Seiten frei zugänglich ist. Nach erfolgter Bearbeitung kann es so leicht entfernt und durch ein neues noch zu bearbeitendes Werkstück T ersetzt werden.

Nach dem Werkstückwechsel wird mittels der Spindel 13 der Rahmen 10 wieder aus der in Fig. 4 dargestellten unteren Stellung in die obere Stellung gemäß Fig. 2 hochgefahren, wobei die an dem Rahmen 10 befestigten Wände 6 aufgefaltet werden und den Faltenbalgbehälter 5 bilden.

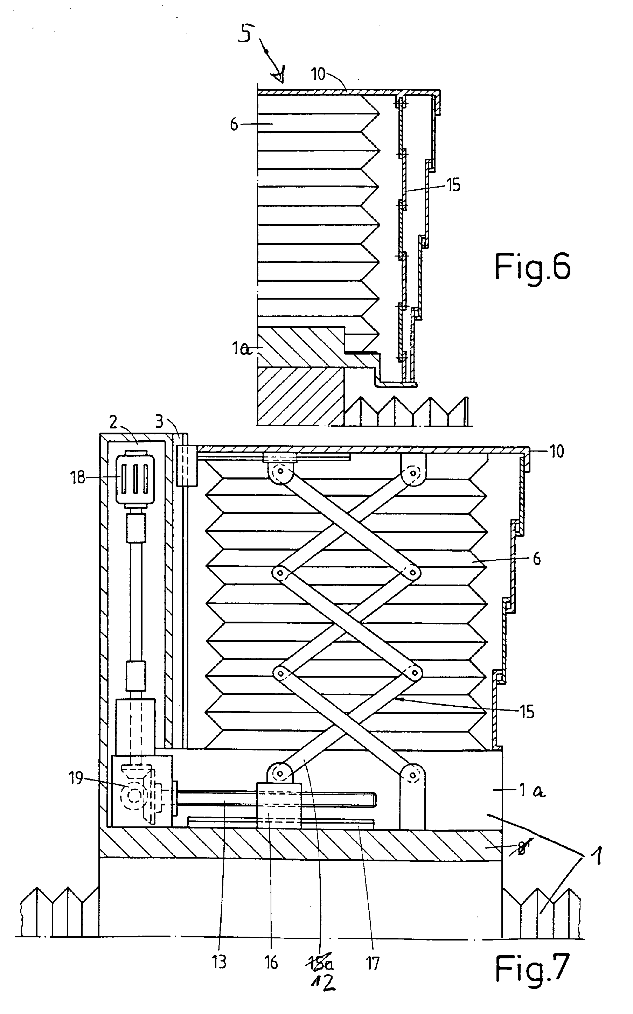

Fig. 5 zeigt die Ausführung des Faltenbalgbehälters 5 mit an ihm befestigtem Überlauf 11 in Form eines Faltenbalges.

Bei der Ausführung gemäß Fig. 6 und 7 ist zusätzlich an gegenüberliegenden Seiten des Rahmens 10 je eine Nürnberger Schere 15 vorgesehen, die einerseits an dem Rahmen 10 angelenkt ist und andererseits an einem am Aufspanntisch 1a angebrachten oder mit diesem einstückigen Rand 8, der tiefer als die Aufspannebene 1b liegt. Ein Hebel 12 der Nürnberger Schere 15 ist an einer Spindelmutter 16 befestigt, die entlang einer Führungsschiene 17 mittels der Spindel 13 horizontal verschiebbar ist. Die Drehung der Spindel 13 wird durch einen Motor 18 über Getriebe 19 bewirkt. Mittels der Spindelmutter 16 kann die Nürnberger Schere 15 geöffnet und geschlossen werden, wodurch der an ihr befestigte Rahmen 10 und damit die an diesem befestigten faltbaren Wände 6 auf- und abwärts bewegbar sind.

**Bezugszeichenliste**

| | |
|---|---|
| 1 | Kreuztisch |
| 1a | Aufspanntisch |
| 1b | Spannebene |
| 2 | Rückwand |
| 3 | Führungsnuten |
| 4 | Dielektrikumsverteilung |
| 5 | Faltenbalgbehälter |
| 6 | Wand |
| 7 | unterer Rand |
| 8 | Rand |
| 9 | oberer Rand |
| 10 | Rahmen |
| 11 | Überlauf |
| 12 | Hebel |
| 13 | Spindel |
| 15 | Nürnberger Schere |
| 16 | Spindelmutter |
| 17 | Führungsschiene |
| 18 | Motor |
| 19 | Getriebe |
| 20 | Leitung |
| D | Dielektrische Flüssigkeit |
| E | Elektrode |
| K | oberer Kragarm |
| S | Ständer |
| T | Werkstück |
| U | unterer Kragarm |
| W | Werkzeugkopf |

**Patentansprüche**

1. Funkenerosionsmaschine mit einem Ständer (S), der in Seitenansicht C-Profil hat und an seinem oberen Kragarm (K) den Werkzeugkopf (W) trägt, der in der Horizontalebene (x-,y-Achse) ortsfest und in der Vertikalen (z-Achse) hin- und herbeweglich angeordnet und mit Mitteln zur Aufnahme der Bearbeitungselektrode (E) ausgestattet ist, sowie mit einem Aufspanntisch (1a) für das zu bearbeitende Werkstück (T) und einem darauf befestigten Behälter zur Aufnahme der dielektrischen Arbeitsflüssigkeit (D),
**dadurch gekennzeichnet,** daß der Arbeitstisch ein Kreuztisch (1) ist und daß der Behälter ein Faltenbalgbehälter (5) ist mit höhenverstellbarem Rahmen (10) und daran befestigten in vertikaler Richtung ziehharmonikaartig auf- und zusammenfaltbaren Wänden (6), deren unterer Rand (7) dichtend am Aufspanntisch (1a) befestigt ist.

2. Funkenerosionsmaschine nach Anspruch 1,
**dadurch gekennzeichnet,** daß die Mittel zur Höhenverstellung des Rahmens (10) auf dem Aufspanntisch (1a)

EP 0 347 716 B1

abgestützt sind.

3. Funkenerosionsmaschine nach Anspruch 1 oder 2,
**dadurch gekennzeichnet,** daß der Rahmen (10) über pneumatische oder hydraulische Kolben-Zylinder-Einheiten oder über Spindeltriebe (13) höhenverstellbar ist.

4. Funkenerosionsmaschine nach Anspruch 2,
**dadurch gekennzeichnet,** daß der Rahmen (10) über zwei Nürnberger Scheren (15) höhenverstellbar ist.

5. Funkenerosionsmaschine nach einem der Ansprüche 1 bis 4,
**dadurch gekennzeichnet,** daß der untere Rand (7) der faltbaren Wände (6) unterhalb der Spannebene (1b) des Aufspanntisches (1a) an diesem befestigt ist.

6. Funkenerosionsmaschine nach einem der Ansprüche 1 bis 5 mit Behälter für die Aufnahme der dielektrischen Arbeitsflüssigkeit um den Aufspanntisch für das zu bearbeitende Werkstück und mit einem Überlauf für die dielektrische Flüssigkeit,
**dadurch gekennzeichnet,** daß der Überlauf (11) am Rahmen (10) befestigt und mit ihm zusammen höhenverstellbar ist.

7. Funkenerosionsmaschine nach Anspruch 6,
**dadurch gekennzeichnet,** daß der Überlauf (11) als Faltenbalg ausgebildet ist (Fig. 5).


**Revendications**

1. Machine d'étincelage avec un support (5), qui a un profil en C en élévation latérale et porte sur son bras en porte à faux supérieur (K) la tête d'outil (W), qui est disposé fixe en position dans le plan horizontal (axes x, y) et mobile en va-et-vient dans la verticale (axe z) et est équipé de moyens de réception de l'électrode d'usinage (E), ainsi que d'une table de fixation (1a) pour la pièce d'oeuvre (T) à usiner et un récipient fixé dessus pour recevoir le liquide diélectrique de travail (D),
**caractérisée en ce que** la table de travail est une table composée (1) et que le récipient est un récipient à soufflet (5) à châssis (10) réglable en hauteur et à parois déployables et repliables (6) du type accordéon, dont le bord inférieur (7) est fixé de manière étanche à la table de fixation (1a).

2. Machine d'étincelage selon la revendication 1,
**caractérisée en ce que** les moyens de réglage en hauteur du châssis (10) sont appuyés sur la table de fixation (1a).

3. Machine d'étincelage selon la revendication 1 ou 2,
**caractérisée en ce que** le châssis (10) est réglable en hauteur au moyen de vérins pneumatiques ou hydrauliques ou d'actionnements à broches (13).

4. Machine d'étincelage selon la revendication 2,
**caractérisée en ce que** le châssis (10) est réglable en hauteur au moyen de deux pinces extensibles (15).

5. Machine d'étincelage selon l'une des revendications 1 à 4,
**caractérisée en ce que** le bord inférieur (7) des parois pliables (6) est fixé au-dessus du plan de fixation (1b) de la table de fixation (1a) et à celle-ci.

6. Machine d'étincelage selon l'une des revendications 1 à 5, avec un récipient pour recevoir le liquide diélectrique de travail autour de la table de fixation pour la pièce d'oeuvre à usiner avec un trop-plein pour le liquide diélectrique,
**caractérisée en ce que** le trop-plein (11) est fixé au châssis (10) et est réglable en hauteur avec lui.

7. Machine d'érosion selon la revendication 6,
**caractérisée en ce que** le trop-plein (11) est réalisé sous forme de soufflet (figure 5).


**Claims**

1. A spark erosion machine having an upright (5) of C-section in side elevation and bearing on its upper cantilevered arm (K) a tool head (W) which is disposed fixed in the horizontal plane (x, y axis) and horizontally reciprocably in the vertical (z axis) and has means for receiving the processing electrode (E), the machine also having a clamping table (1a) for the workpiece (T) to be processed and a tank attached to the table for receiving the dielectric working fluid (D),
**characterized in that** the work table is a cross-table (1) and the tank is a bellows tank (5) having a vertically adjustable frame (10) and walls (6) which are attached thereto in the vertical direction and can be folded up and together accordion-fashion and whose lower edge (7) is attached sealing-tight to the clamping table (1a).

2. A spark erosion machine according to claim 1,

5

**characterized in that** the means for the vertical adjustment of the frame (10) are borne on the clamping table (1a).

3. A spark erosion machine according to claims 1 or 2, **characterized in that** the frame (10) can be vertically adjusted via pneumatic or hydraulic piston-and-cylinder units or via worm drives (13).

4. A spark erosion machine according to claim 2, **characterized in that** the frame (10) can be vertically adjusted via two lazy tongs (15).

5. A spark erosion machine according to one of claims 1 to 4, **characterized in that** the lower edge (7) of the foldable walls (6) are attached to the clamping table (1a) below the clamping plane (1b) thereof.

6. A spark erosion machine according to one of claims 1 to 5 having a tank for receiving the dielectric working fluid on the clamping table for the workpiece to be processed and an overflow for the dielectric fluid, **characterized in that** the overflow (11) is attached to the frame (10) and can be vertically adjusted together therewith.

7. A spark erosion machine according to claim 6, **characterized in that** the overflow (11) takes the form of bellows (Fig. 5).

Fig. 1a

Fig.1 b

Fig.2

Fig.3

Fig.4

Fig.5

5

10

6

15

# Fig.6

1a

2   3

10

18

6

19

15

1a

8

1

13   16   15a   17   Fig.7

12